# EUROPEAN PATENT SPECIFICATION

(11) **EP 0 747 583 B1**
(45) Date of publication and mention of the grant of the patent: **05.01.2000**
(21) Application number: 96109094.1
(22) Date of filing: 05.06.1996
(51) Int. Cl.: F02B 19/08

(54) **Internal combustion engine of the auxiliary vortex combustion chamber type**
Brennkraftmaschine mit Wirbelvorkammer
Moteur à combustion interne avec préchambre de combustion à vortex

(30) Priority: 05.06.1995 JP 13790395
(43) Date of publication of application: 11.12.1996
(73) Proprietor: YAMAHA HATSUDOKI KABUSHIKI KAISHA, Iwata-shi Shizuoka-ken, 438 (JP)
(72) Inventor: Ito, Hideaki, Iwata-shi, Shizuoka-ken (JP); Hasegawa, Hiroshi, Iwata-shi, Shizuoka-ken (JP)
(74) Representative: Grünecker, Kinkeldey, Stockmair & Schwanhäusser Anwaltssozietät

(56) References cited:
- EP-A- 0 636 773
- DE-A- 2 559 108
- DE-A- 3 415 823
- GB-A- 1 196 790
- GB-A- 2 200 949
- JP-A- 3 121 215
- US-A- 4 006 720
- US-A- 4 141 324
- US-A- 4 434 758
- PATENT ABSTRACTS OF JAPAN vol. 016, no. 141 (M-1232), 9 April 1992 & JP-A-04 001429 (TOYOTA MOTOR CORP), 6 January 1992,
- PATENT ABSTRACTS OF JAPAN vol. 007, no. 047 (M-196), 24 February 1983 & JP-A-57 195819 (MITSUBISHI JIDOSHA KOGYO KK;OTHERS: 01), 1 December 1982,
- PATENT ABSTRACTS OF JAPAN vol. 009, no. 018 (M-353), 25 January 1985 & JP-A-59 165821 (ISUZU JIDOSHA KK), 19 September 1984,

## Description

The present invention relates to an internal combustion engine of the auxiliary vortex combustion chamber type, wherein each cylinder of the engine comprises a main combustion chamber within the cylinder, and an auxiliary combustion chamber is associated to each cylinder, said auxiliary combustion chamber being formed in the cylinder head of the engine and connected to the respective main combustion chamber through a connection hole.

Internal combustion engines of this type, wherein a vortex of compressed air is generated inside the auxiliary combustion chamber, have been applied in four-stroke diesel engines. In these prior art engines, the connecting hole slopes with respect to the axis of the cylinder and is directed tangentially from the inner wall surface of the auxiliary combustion chamber. In these prior art engines, air is caused to flow from the main combustion chamber through the connecting hole to the auxiliary combustion chamber where a vortex flow of compressed air is created. The injection of fuel into this vortex causes ignition and combustion. Internal combustion engines of the type mentioned above are known for example from DE-A1-25 59 108, JP-A-4 001 429 or US-A-4 141 324.

The present inventors encountered the limits of conventional four cycle diesel engines when they attempted to increase the output of engines such as described above without increasing their size. The reason was that an adequate volume ratio for the auxiliary combustion chambers could not be attained. The volume ratio refers to the volume of the auxiliary combustion chamber plus that of the connecting hole with respect to the total volume of the auxiliary combustion chamber, the connecting hole, and the main combustion chamber when the piston is at its top dead point. The larger this volume ratio, the more air can be sent to the auxiliary combustion chamber during the compression stroke, thereby enabling higher air utilization with resulting higher output.

Since the auxiliary combustion chambers must be formed in the cylinder head, which, in four-cycle diesel engines, conventionally holds the air intake and exhaust valves and the valve drive apparatus, it is only possible to attain volume ratios wherein the volume of the auxiliary combustion chamber comprises only about 50% of the total volume. To wit, there is a low air utilization rate because even when the piston is at its top dead point, about the same amount of air that is sent to the auxiliary combustion chamber remains in the main combustion chamber and the connecting hole.

Further requirements when trying to improve the engine output over the conventional four cycle diesel engines having auxiliary vortex combustion chambers are to lower the smoke concentration in the exhaust emissions, decrease the combustion noise (knocking sounds), and in addition, reduce the NOₓ content in the exhaust gases.

According to DE-A1-25 59 108, the volume ratio is not more than 90%. Further, this document discloses a range of 1 to 10% for the ratio of the minimum cross-sectional area of a connecting hole to the cross-sectional area of a cylinder bore. Further, JP-A-04 001429 teaches a volume ratio in a gasoline injection engine having an auxiliary combustion chamber in the range of 30 to 70%. From US-A-4 141 324, a volume ratio in the range of 70 to 85% is known.

Further, JP-A-57 195819 discloses a combustion chamber of the subchamber type diesel engine wherein the cross-sectional area is in the range of 0.7 to 1.6%.

US-A-4 434 758 discloses a cross-sectional area ratio in the range of 0.7 to 1.0%, whereas JP-A-59 165821 discloses 1.2% for the cross-sectional area ratio.

The present invention has been developed to resolve the foregoing problems and thus intends to provide an internal combustion engine of the type as defined in the opening paragraph, having a higher output without increasing the size of the engine, a reduced concentration of exhaust smoke, a lower combustion noise and wherein the NOₓ content in the exhaust gas is kept low.

Accordingly, this technical problem is solved by an internal combustion engine comprising the features of claim 1.

The auxiliary combustion chambers are formed virtually throughout the cylinder head thereby allowing to make the volume composed of the volume of each auxiliary combustion chamber and connection hole about 65% to 95% of the total combustion chamber volume when the piston is at its top dead point.

When the piston is at top dead center, more than half the air distributed through the entire combustion chamber is sent from the main combustion chamber to the auxiliary combustion chamber thereby allowing an increase in output of vortex chamber type internal combustion engines.

The minimum cross-sectional area of the connection hole ranges from about 1.3% to 2.2% of the cross-sectional area of the cylinder bore of the respective cylinder. Thus, the connection hole provides little resistance to the flow of air into the auxiliary combustion chamber or to the flow of the combustion gases from the auxiliary combustion chamber to the main combustion chamber. Moreover, it allows the generation of a strong vortex flow inside the auxiliary combustion chamber to improve the mixing efficiency of the air and the fuel and they provide a smooth output of the combustion gases into the main combustion chambers.

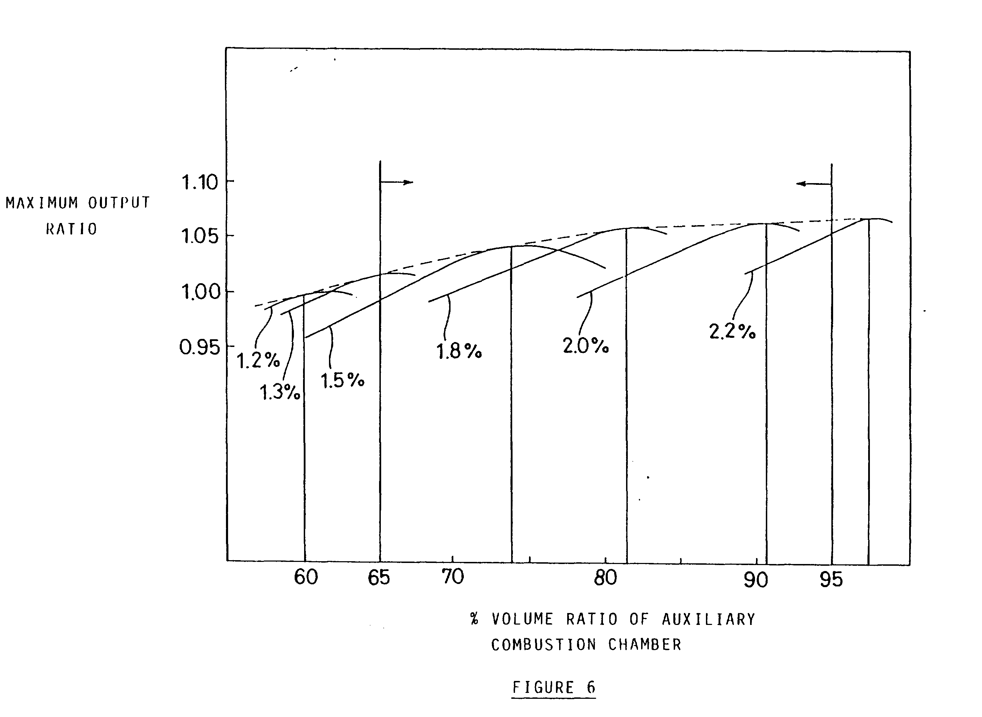

The minimum cross-sectional area is determined on the basis of the volume ratio while the minimum cross-sectional area increases with an increase of the volume ratio as stated in claim 1 to thereby increase the engine output as shown in the diagram of figure 6.

According to a preferred embodiment, an inner wall surface of the auxiliary combustion chamber is provided with a continuous stepped edge or protrusion which is substantially perpendicular to the direction of swirl of a vortex generated in the auxiliary combustion chamber. Thus, turbulence is introduced into the vortex flow inside the auxiliary combustion chamber by said step or protrusion causing the fuel to be distributed approximately uniformly throughout the entire auxiliary combustion chamber.

Preferably, the cylinder head comprises a lower head having at least one portion forming a part of the auxiliary combustion chamber and a top cylinder head having at least one portion forming part of the same auxiliary combustion chamber. This simplifies the making of the auxiliary combustion chamber and, moreover, provides the possibility of a wide range of design for the walls of the auxiliary combustion chamber and thus to optimize the flow of air and fuel in the chamber.

According to another embodiment of the invention, the connection hole extends tangentially from the inner wall surface of an auxiliary combustion chamber and is directed towards a center area of the crown of the respective piston and the beginning of its expansion stroke. The combustion gases flowing from the auxiliary combustion chamber into the main combustion chamber thus allow the heat applied to the piston from the combustion gases to be dispersed towards the periphery of the piston.

According to another embodiment of the invention, air intake and exhaust openings are provided in each cylinder. These openings are opened and closed by the piston. Moreover, a compression ratio variation mechanism lowers the upper edge position of the exhaust opening under low and mid range speed of the engine and raises the upper edge of the exhaust opening under high speed conditions of the engine. Thus, during the low and mid range RPM operating conditions of the engine the compression ratio is increased and the exhaust timing is delayed, while during the high RPM operating range the compression ratio is lowered and the exhaust timing is advanced, and moreover, the cross-sectional area of the exhaust opening is increased.

Further advantageous embodiments of the invention can be derived from the subclaims.

Preferred embodiments of the invention will be described hereinafter with reference to the accompanying drawings, wherein:

**Figure 1** is a vertical cross sectional view of an engine with auxiliary vortex combustion chambers according to a first embodiment of the invention.

**Figure 2** is a sectional view along line II-II of Figure 1.

**Figure 3** is a sectional view along line III-III of Figure 1.

**Figure 4** is a graph that can be employed as a map for determining the throttle valve aperture.

**Figure 5** is a sectional view showing an enlargement of the top of a cylinder.

**Figure 6** is a graph showing the relationship between the volume ratio of the auxiliary combustion chambers and output.

**Figure 7** shows another embodiment which locates a step area on the inside wall the auxiliary combustion chamber by making the inside diameter of the hot plug to be greater than the diameter of the opening for the concave area in the upper cylinder head; (a) of that Figure is a sectional view, and (b) of that Figure is a top view showing the bottom cylinder head with the hot plug installed.

**Figure 8** shows another embodiment which locates a step area on the inside wall the auxiliary combustion chamber by making the inside diameter of the hot plug smaller than the diameter of the opening for the concave area in the upper cylinder head; (a) of that Figure is a sectional view, and (b) of that Figure is a top view showing the bottom cylinder head with the hot plug installed.

**Figure 9** shows another embodiment which locates a step area on the inside wall of the auxiliary combustion chamber by inserting a gasket between the joining surfaces of the hot plug and upper cylinder head assembly and the lower cylinder head; (a) of that Figure is a sectional view, and (b) of that Figure is a top view showing the gasket resting atop the hot plug.

**Figure 10** is a sectional view of the top of the cylinder head of an additional embodiment wherein the combustion gases are impinging the approximate center of the crown of the piston during the initial part of the expansion stroke.

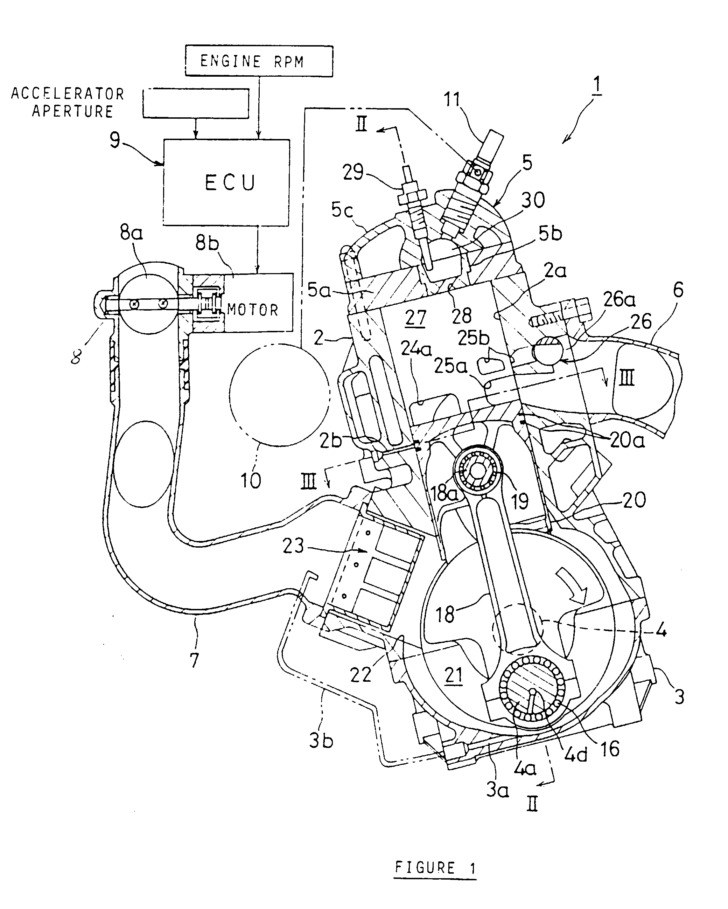

A first embodiment will be explained in detail with reference to Figures 1 through 6.

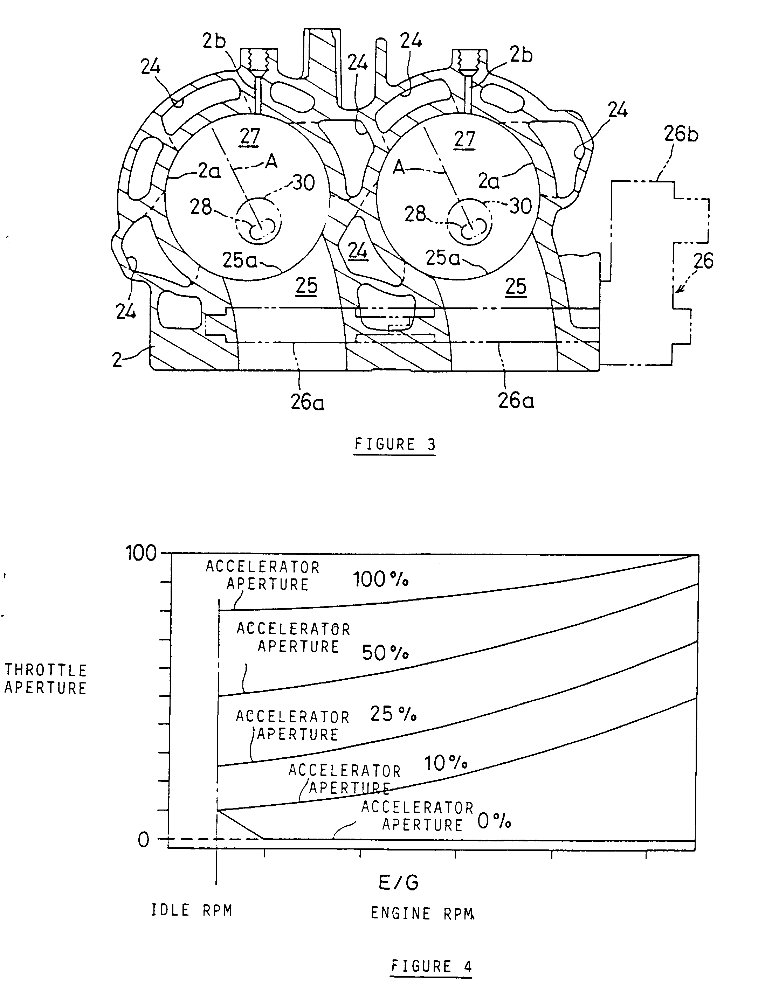

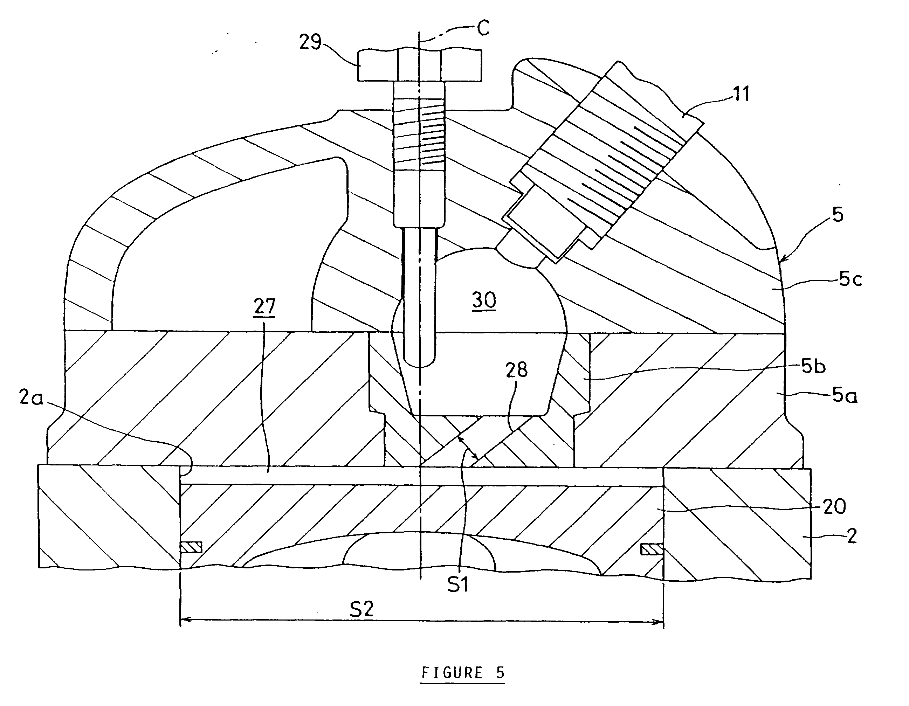

Figure 1 is a vertical sectional view of an engine equipped with auxiliary vortex combustion chambers according to this invention. Figure 1 is a sectional view taken along line II-II of Figure 1. Figure 3 is a sectional view taken along line III-III of Figure 1. Figure 4 is a graph that can be used as a map for determining the throttle valve aperture. Figure 5 is a sectional view showing an enlargement of the top of a cylinder. Figure 6 is a graph showing the relationship between the volume ratio of the auxiliary combustion chambers and output.

In these Figures, 1 represents a water cooled, two-cylinder, two-cycle diesel engine (referred to as "engine" below).

This engine 1 supports a crankshaft 4 sandwiched between the cylinder block 2 and the crankcase 3 beneath it; in addition a cylinder head 5 is mounted atop the cylinder block 2. The rotation of the crankshaft 4 in this engine 1 is set to be toward the right as shown in Figure 1.

An exhaust pipe 6 is connected to one side of the foregoing cylinder block 2, and an air intake manifold 7 connects at the bottom of the other side. The foregoing exhaust pipe 6 has a structure that converges the exhaust passages from each cylinder. The foregoing air intake manifold 7 has internal air intake passages that branch to each cylinder. Upstream of the branch are a throttle valve apparatus 8, as well as an air intake pipe and air cleaner that are not shown in the Figures.

The foregoing throttle valve apparatus 8 is composed of a butterfly type of throttle valve 8a that is driven by a motor 8b. In Figure 1, the drawing indicates that the coaxial line of the axes of the throttle valve 8a and motor 8b intersects the axis of the crankshaft 4, but it could also have an axial line that ran parallel to the crankshaft.

The foregoing motor 8b is controlled by an ECU 9 which also controls the amount of fuel injected and the oil supply for this engine 1. To wit, the map shown in Figure 4 is read on the basis of the engine RPM which is detected by an engine RPM detection sensor (not shown), and of the accelerator aperture (the degree to which the accelerator has been moved, not shown), as detected by an accelerator aperture detection sensor (not shown), whereupon the motor 8b is driven to make the aperture of the foregoing throttle valve 8a match the aperture that is read from the map. In determining the amount of control of the motor 8b, it would also be possible to use the engine load as represented by the engine RPM and the amount of fuel injection, etc. It would also be possible to use a signal that represents all parameters: the engine RPM, accelerator aperture, the amount of fuel injection, etc.

The map of Figure 4 shows the air intake control exercised by the throttle valve 8a when the engine 1 is operating in the idling to the low-to-mid- RPM operating range. Further, when the engine RPM is constant, and the accelerator is operated for more (or less) acceleration, the aperture of the throttle valve 8a is increased (or decreased) accordingly. When the accelerator position is constant, and the engine RPM increases (or decreases), then the aperture of the throttle valve 8a is increased (or decreased) accordingly.

To wit, the constriction imposed by the throttle valve is not linked, as it generally is in the air intake systems of conventional diesel engines, to the movement of the accelerator, rather, it has a structure that supplies all the air intake to the engine. Accordingly, in the engine 1 of this embodiment, when the engine RPM range is in the idling RPM range to the low-mid-RPM range, the air intake is designed to be commensurate with the operating state of the engine.

By controlling the air intake in this manner, the amount of combustion gas remaining inside the cylinder is thereby increased, causing the combustion to be retarded (the combustion interval lengthened), which feature not only reduces knocking noise, but also lowers NOₓ emissions that result from low combustion temperatures.

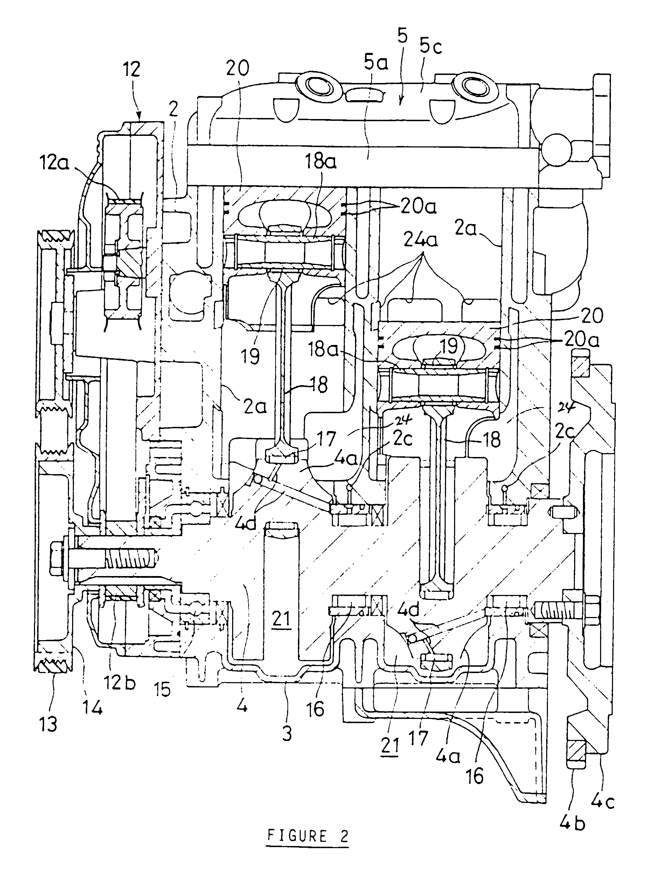

The fuel injection pump 10 is located in close proximity to the foregoing throttle apparatus 8. The structure of this fuel injection pump 10 is such that it is driven by the engine 1 to send fuel to the fuel injection valves 11 for each cylinder. The amount of fuel supplied by this fuel injection pump 10 is controlled by the foregoing ECU 9. Further, as shown in Figure 2, the fuel injection pump is affixed to the belt cover 12 which is located at one end of the engine 1 in the crankshaft direction. The drive structure for this fuel injection pump 10 is provided by an input pulley (not shown) inside the foregoing belt cover 12, and a fuel injection pump belt 12a, to drive this pulley by transmitting the drive of the crankshaft-side pulley 12b.

On the opposite side of the cylinder block 2 from the foregoing belt cover 12 is the accessory belt 13 which transmits the rotation of the crankshaft 4 to drive the engine accessories. As shown in Figure 2, this accessory belt 13 winds around the crankshaft pulley 14 that is affixed to the end of the crankshaft 4, around the compressor pulley for the air conditioner (not shown) the alternator pulley, the water pump pulley, the power steering pump pulley, and the idler pulley.

Next, the internal configuration of the engine 1 will be described. As is shown in Figure 2, the crankshaft 4 of the engine 1 is rotatably supported by ball bearings 15 and roller bearings 16 interposed between the cylinder block 2 and the crankcase 3. The large ends of connecting rods 8 are connected through needle bearings 17 to a crank pin 4a for each cylinder. Connected to the opposite end of the crankshaft 4 from the foregoing crank pulley 14 is a fly wheel 4c which has a ring gear 4b that is engaged by the starter.

The small ends of the foregoing connecting rods 8 are connected by the needle bearings 19 and piston pins 18 to the pistons 20 in each cylinder. These pistons 20 are slidably inserted into the cylinder bores 2a of the cylinder block 2. 20a represents piston rings.

The foregoing cylinder block 2 has sleeveless, plated cylinders, and the assembly of the crankshaft 4 and the crankcase 3 creates crank chambers 21 for each cylinder. There are air intake openings 22 formed in the bottom of these crank chambers 21 to allow the introduction of air. The foregoing air intake manifold 7 connects to these air intake openings. The air intake passages formed inside the air intake openings contain a reed valve apparatus 23 of conventional design.

Further, oil holes 2b are formed in the cylinder block 2 and supply oil to the sliding surface of the pistons 20 on the foregoing air intake side of the cylinder bores 2a. On the opposite side of the cylinder bores 2a from these oil holes 3b are formed oil holes 2c which supply oil to the support areas for the crankshaft 4 (see Figure 2). Oil is supplied to these oil holes 2b, 2c by an oil pump not shown in the Figures.

On the downstream end of the foregoing oil holes 2c are openings in the cylinder block 2 for the top wall surfaces of the bearings. Further, oil holes 4d are formed in the crankshaft 4, which deliver the oil that was sent under pressure to the foregoing roller bearings 16, on to the needle bearings 17 that support the connecting rod by centrifugal force. Also, when the oil is sent through the foregoing oil holes 2b, 2c, the excess oil collects in the bottom of the crankcase 3, but due to the pressure differential between the crank chamber 21 and the inside of the air intake manifold 7, this oil returns into the air intake manifold 7. To wit, as shown in Figure 1, there are oil drain holes 3a formed in the bottom of the crankcase 3, and these oil drain holes 3a are connected by oil return tubes 3b to the inside of the air intake manifold 7.

Further, scavenging passages 24, which link the foregoing crank chambers 21 to the inside of the cylinder bores 2a, and exhaust passages 25 are formed in the cylinder block 2. As is shown in Figure 3, the foregoing scavenging passages 24 are formed in three places around each cylinder bore 2a and are linked to the inside of the cylinder bore 2a by respective scavenging ports 24a. Further, there is a main exhaust port 25a formed at a position slightly higher than the top edge of the foregoing scavenging ports 24a, and a pair of auxiliary exhaust ports 25b which have openings that are higher than the main exhaust port 25a; their upstream ends connect to the cylinder bore 2a, while their downstream ends connect to the exhaust passage inside the foregoing exhaust pipe 6.

An exhaust control apparatus 26 is installed in the area of the foregoing exhaust passage 25 where the foregoing auxiliary exhaust ports 25 pass to the inside of the cylinder bore 2a. This exhaust control apparatus 26 can change the exhaust timing and the compression ratio, and is composed of a rotatably inserted rod-shaped valve body 26a that passes across the exhaust passage areas of the foregoing auxiliary exhaust ports 25b in the cylinder block 2, and a drive mechanism 26b that can rotate these valve bodies 26a. There are valve areas having an arc-shaped cross-section formed on the rod for each cylinder, and there are tooth like engagement areas formed on the pair of rods to link their movement. They are linked to the drive mechanism 26b on one end in the axial direction. The drive mechanism 26b has a drive shaft (not shown) that is linked to one end of the shaft of the foregoing valve body 26a, and this drive shaft is in turn linked by a toothed gear to a drive motor (not shown). This drive motor is controlled by the foregoing ECU 9 to close the valve bodies 26a when the engine RPM is in the idling, or low to mid-RPM operating range, thereby closing the foregoing auxiliary exhaust passages, and to open the valve bodies 26a when the engine reaches the high RPM operating range as shown in Figure 1, thereby allowing the exhaust gases to be expelled through the foregoing auxiliary exhaust passages as well.

When the foregoing valve bodies 26a are in the closed position, the beginning of the compression timing is advanced and the beginning of the exhaust timing is delayed compared to when they are open, and in addition, the compression ratio is higher. Because of the higher compression ratio brought on by the closing of the valve bodies 26a, the engine 1 easier to start, and it runs more stably in the low and mid-RPM operating ranges. When the valve bodies 26a are in the open position, the pumping loss during high RPM operating ranges is reduced, and the cross-sectional area of the exhaust passage is increased to reduce the exhaust resistance, thereby allowing for higher output.

As is shown in Figure 1, the cylinder head 5, which comprises the top wall the main combustion chambers that are formed inside the cylinder bores is composed of a lower cylinder head 5a which is attached to the top end of the cylinder block 2; of hot plugs 5b, which are shaped approximately like a cylinder with a bottom and which are fastened into the bottom cylinder head 5b; and of a top cylinder head 5c which is attached over the foregoing bottom cylinder head 5a and hot plugs 5b. The foregoing upper and lower cylinder heads 5a and 5c are formed from aluminum alloy and the hot plugs 5b are formed from stainless steel.

Retention holes, having a small diameter area and a large diameter area, are formed in the foregoing lower cylinder head 5a on the exhaust port side (main exhaust port 25a and auxiliary exhaust ports 25b) with respect to the cylinder axes, and the foregoing hot plugs 5b are inserted from the top and held in these retention holes. A connecting hole 28 is bored into the bottom of each of the foregoing hot plugs 5b which are shaped approximately like a cylinder with a bottom. The axis of these connecting holes 26 extends downward, sloping to gradually diverge away from the exhaust port side. These connecting holes are shown in Figure 3 by the single-dot line A.

Approximately hemispherical concave areas are formed in the foregoing upper cylinder head opposite the cylindrical areas of the foregoing hot plugs 5b. The foregoing fuel injection valves 11 inject fuel into these concave areas. A glow plug 29 also abuts the inside of each concave area.

Then, the foregoing lower cylinder head 5a and the hot plugs 5b are assembled with the hot plugs 5b inserted into the retaining holes in the lower cylinder head, and next that assembly is fastened, together with the upper cylinder head 5c, to the top of the cylinder block 2. Fastening this cylinder head 5 to the cylinder block 2 causes the main combustion chambers 27 to be formed inside the cylinder bores 2a and causes flat bottomed auxiliary combustion chambers 30 to be formed inside the cylinder head 5, being composed of the cylindrical area of the hot plugs 5b and the area inside the wall surface of the foregoing concave areas of the foregoing cylinder head 5c, being located on the exhaust port side relative to the cylinder axis. If the auxiliary combustion chambers 30 were considered being approximately spherical, then the foregoing connecting holes would extend tangentially from them.

At this point the volume of the foregoing auxiliary combustion chambers 30 and the connecting holes, and the minimum cross-sectional area of the connecting holes will be discussed. The volume obtained by adding the volume of a connecting hole 28 to that of an auxiliary combustion chamber 30 is set to be about 65 to 95% of the total volume of a main combustion chamber 27, auxiliary combustion chamber 30 and connecting hole 28 when the piston 20 is at its top dead point. This percentage will be called the volume ratio below. In this way, the volume ratio of the auxiliary combustion chambers, being about 65 to 95%, is greater than in engines of the prior art, and this advantage is made possible by not installing the air intake and exhaust valves, or the dynamic valve apparatus to drive them, in the cylinder head 5.

Further, the minimum cross-sectional area of the connecting holes 28 has been set to be about 1.3 to 2.2% of the cross-sectional area of the cylinder bore 2a. This percentage will be called the connecting hole area ratio below. The foregoing cross-sectional area of the connecting hole 28 is referred to by the reference number S1 in Figure 5 for the present embodiment, while the cross-sectional area for the cylinder bore 3a is referred to by the reference number S2 in Figure 5. When a constriction or the like is formed in the connecting hole 28, this constricted area would constitute the minimum cross-sectional area. Further, the broken line C in Figure 5 represents the cylinder axis.

The foregoing volume ratio and connecting hole area ratio were discovered by these inventors through experimentation. The experimental results are shown in Figure 6. Figure 6 shows the maximum output with respect to the volume ratio when the connecting hole area ratio is varied. If the maximum output is normalized to 1 for the conditions of a volume ratio 60% and a connecting hole ratio 1.2% that are close to those typically used in the four cycle diesel engines of the prior art (volume ratio 50%, connecting hole area ratio 1%), the Figure shows the maximum output ratio as a multiple of this standard output value.

As is clear from the results of this experiment, when the connecting hole area ratio is 1.3%, then the maximum output is achieved with a volume ratio of 65%, while at this time the maximum output ratio is about 1.02, or about 2% higher than under standard conditions. Similarly the maximum output is achieved, respectively, at a volume ratio of about 74% when the connecting hole area ratio is 1.5%, at a volume ratio of about 81% when the connecting hole area ratio is 1.8%, at a volume ratio of about 90% when the connecting hole area ratio is 2.0%, and at a volume ratio of about 97% when the connecting hole ratio is 2.2%.

The maximum output under the foregoing conditions is higher than that under the standard conditions, and when a combination of the volume ratio and the connecting hole area ratio are used to obtain the maximum output, the higher the connecting hole area ratio, the higher the output realized. When the connecting hole area ratio is set to values other than those described above, the maximum output would be indicated by the broken line in Figure 6.

The two-cycle diesel engine 1 with the above-described configuration is started by a starter motor (not shown) rotating the crankshaft 4. When the crankshaft 4 is rotated, the air passes through the air intake system as follows: from the air cleaner → the air intake pipe → the throttle valve apparatus 8 → the air intake manifold 7 → the reed valve apparatus 23 to enter the crank chamber 21, where it is compressed and introduced into the main combustion chambers 27 through the scavenging passages 24 and the scavenging ports 24a.

Then, during a compression stroke, the air inside a main combustion chamber 27, passes through a connecting hole 28 to enter the auxiliary combustion chamber 30, thereby causing a vortex of compressed air to be generated inside the auxiliary combustion chamber 30. The injection of fuel from a fuel injection valve 11 into this vortex flow causes ignition and combustion to take place. Then the combustion gases pass through the connecting hole 28 into the main combustion chamber 27, being directed from the exhaust port side toward the opposite side of the cylinder axis C, whereupon the pressure increase inside the main combustion chamber 27 causes the piston 20 to descend.

During the expansion stroke, the movement of the piston beneath the top edge of the main exhaust port 25a and the auxiliary exhaust ports 25b causes the combustion gases to be expelled from the main combustion chamber through the exhaust passage, and out of the exhaust pipe 6.

Accordingly, since this engine 1 has a volume composed of the volume of an auxiliary combustion chamber plus the volume of a connecting hole, that is about 65 to 95% of the total combustion chamber volume when the piston is at its top dead point as shown in Figure 5, more than half of the air used for combustion being sent to the auxiliary combustion chamber to generate a vortex. Accordingly, when fuel is injected into this auxiliary combustion chamber, there is a higher air utilization rate than was possible in the prior art.

Furthermore, since the minimum cross-sectional area of the connecting hole between each main combustion chamber and auxiliary combustion chamber is set to be about 1.3 to 2.2% of the cross-sectional area of the cylinder bore 2a, there is but little resistance to the flow of air into the auxiliary combustion chambers 30 and to the outflow of the combustion gases from the auxiliary combustion chamber. This design not only allows the generation of a strong vortex inside the auxiliary combustion chambers and efficient mixing with the fuel, but it also facilitates the smooth flow of the combustion gases into the main combustion chambers 27.

The present embodiment utilizes sleeveless, plated cylinders in the cylinder block 2, providing good heat transmission and allowing the cylinder bores to remain fairly unaffected by the heat of the combustion gases. Accordingly it is possible to direct the axis of the connecting holes 28 in a direction that is different from that presented in this embodiment.

To wit, this embodiment, as shown in Figure 3, has the axis A of each connecting hole 28 slanting with respect to the cylinder axis C toward the side of the cylinder opposite the exhaust ports 25a, 25b. This design was adopted in order to prevent variation in the heat distribution. Since the exhaust port 25a, 25b is the hot side of the cylinder block, the combustion gases are directed toward the opposite side of the cylinder with respect to the cylinder axis. It would however be possible, to direct the foregoing axis line A toward the opposite side of the cylinder with respect to the cylinder axis C in a manner such that the axis is perpendicular to the axial direction of the piston pin 18a.

When the structure is adopted where the axis A of the connecting holes is perpendicular to the piston pins, when the piston 20 is at its top dead point, the combustion gases are unlikely to invade the area of the piston ring on the exhaust port side and the piston 20 is less subject to heat deformation.

The reason the combustion gases can invade the area of the piston rings on the exhaust port side is due to the shaking movement of the piston 20 when it reaches its top dead point. This shaking movement occurs as follows.

When the crankshaft 4 is rotating to the right as shown in Figure 5, during the compression stroke, the crank pin 4a is positioned to the left side of the cylinder axis as shown in the Figure, causing a side pressure to be exerted toward the exhaust port 25a, 25b side. On the other hand, during the expansion stroke, the crank pin 4a is positioned on the opposite side with respect to the cylinder axis and the side pressure is exerted in the opposite direction compared with the foregoing compression stroke, thereby pushing the piston 20 toward the side opposite the exhaust ports. When the piston 20 is at its top dead point, and the direction of pressure changes as described above because the region from the piston pin to the crown of the piston is heavier than the bottom of the piston, the movement of the top of the piston is delayed, and the bottom of the piston is shifted first to the side opposite the exhaust ports. This phenomenon causes the piston to rotate in a shaking movement around the piston pin 18a at the top dead point.

To wit, when the piston 20 of the engine 1 in the present embodiment undergoes this shaking movement, the crown surface of the piston tilts and is lower on the exhaust port side, thereby causing the top of the piston to be in close contact with the inside wall surface 2a on the exhaust port side. By a design such that the axis A of the connecting hole shall be perpendicular to the piston pin 18a, when the piston 20 undergoes this shaking movement, the invasion of a part of the combustion gases being sprayed out of the connecting hole into the region of the piston rings on the exhaust port side can be effectively prevented.

Further, what is meant by the piston 20 being less susceptible to heat deformation when the axis A of the connecting hole 28 is formed in a direction perpendicular to the piston pin 18a is that the combustion gases being sprayed from the connecting hole strike the crown surface of the piston in the approximate center in the axial direction of the piston pin 18a. To wit, the heat from the combustion gases is transmitted approximately equally to the two boss areas of the piston 20 that hold the piston pin 18.

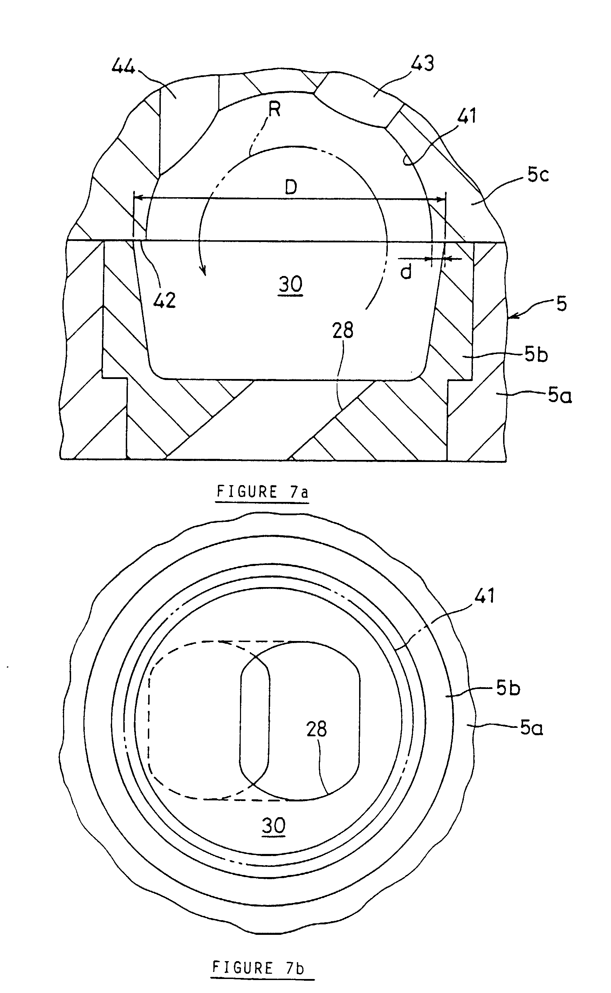

Another embodiment of the internal combustion engine having auxiliary vortex combustion chambers will be described below with reference to Figures 7 through 9.

In the embodiment shown in Figure 7, the inside diameter of the hot plug has been formed to be greater than the diameter of the concave area in the cylinder head which creates an internal step on the inside wall surface of the auxiliary combustion chamber, Figure 7 (a) is a sectional view, and 7 (b) is a top view of the bottom cylinder head showing the installed hot plug.

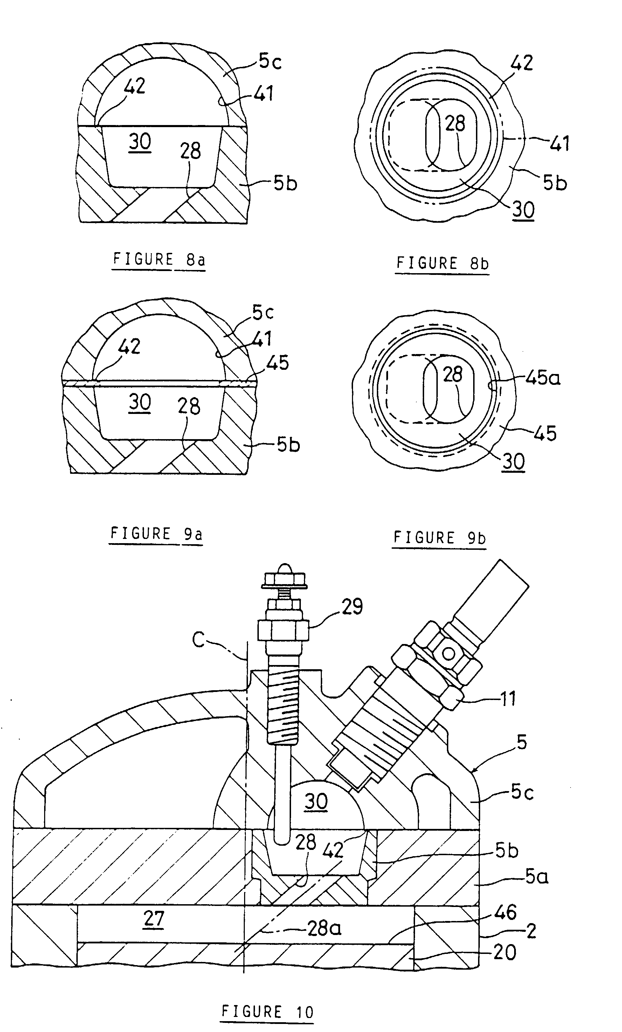

In the embodiment shown in Figure 8, the diameter of the concave area in the upper cylinder head has been formed to be larger than the inside diameter of the hot plug. Figure 8(a) is a sectional view, and Figure 8(b) is a top view of the hot plug. In the embodiment shown in Figure 9, there is a gasket positioned between the adjoining surfaces of the hot plug and the upper cylinder head with the lower cylinder head which creates a step on the inside wall surface of the auxiliary combustion chamber. Figure 9(a) is a sectional view, and Figure 9(b) is a top view of the hot plug. In these Figures, parts that are the same as or similar to those described in the foregoing Figures 1 through 6 bear the same reference numbers, so that further explanation of them will be omitted.

The hot plug 5b shown in Figure 7 has an inside cylindrical area diameter that is greater than the opening diameter of the concave area 41 of the upper cylinder head 5c. By adopting this structure, there is a continuous step 42 that runs around the circumference on the wall surface of the auxiliary combustion chamber. This step 42 extends approximately perpendicularly to the swirl direction R of the vortex. The dimension d of this step 43 is set to be about 1 to 10% of the maximum diameter D of the auxiliary combustion chamber. In Figure 7(a), the openings 43, 45 into the auxiliary combustion chamber are insertion holes for the fuel injector and glow plug.

With regard to the top cylinder head 5c shown in Figure 8, the opening diameter of the concave area 41 has been formed to be larger than the inside diameter of the hot plug 5b. This structure creates a step 43 around the inside wall the auxiliary combustion chamber 30.

In Figure 9, a gasket 45 has been installed between the adjoining surfaces of hot plug 5b and bottom cylinder head (not shown) and the top cylinder head 5c in order to create the step area 42 on around the inside wall the auxiliary combustion chamber 30. To wit, there is a hole 45a formed in the foregoing gasket 45 in a position that conforms to the auxiliary combustion chamber, but with a diameter that is slightly smaller than the inside diameter of the auxiliary combustion chamber, and the edge of this opening is utilized as the step 42.

Thus, by forming a step area 42 as shown in Figures 7 through 9, it is possible to generate turbulence in vortex flow inside the auxiliary combustion chamber, thereby serving distributing the fuel approximately uniformly throughout the inside of the auxiliary combustion chamber. This feature permits the combustion to initiate quickly after the injection of the fuel and makes it possible to extend the combustion interval to realize nearly complete combustion of the fuel, improving engine output.

It is further possible to extend the connecting hole 28 in the manner shown in Figure 10.

Figure 10 is a sectional view showing the top of the cylinder for an embodiment in which the combustion gases are directed toward the approximate center of the crown of the piston at the beginning of its expansion stroke. The parts in the Figure that are the same as or similar to those described in the preceding Figures 1 through 9 bear the same reference numbers, so that further explanation of them will be omitted.

The auxiliary combustion chamber 30 and connecting hole 28 shown in Figure 10 have been shifted more toward the exhaust port side with respect to the cylinder axis than the auxiliary combustion chamber shown in Figures 1 through 5. Further, the connecting hole has an axis 28a that has been directed toward the approximate center of the crown 46 of the piston 20 when it is at the beginning of its expansion stroke.

By adopting this configuration, the combustion gases entering the main combustion chamber 27 from the auxiliary combustion chamber 30 strike the approximate center of the crown of the piston 46 during the initial period of the expansion stroke, thereby facilitating the dispersing of the heat applied by the combustion gases to the piston toward the periphery of the piston 20.

The embodiments described above employed three-piece cylinder heads 5 composed of the lower cylinder head 5a, the hot plugs 5, and the upper cylinder head 5c in order to form the auxiliary combustion chambers, however, it would be possible to use a one-piece or two-piece cylinder head.

In the case of using a one-piece cylinder head having the auxiliary combustion chambers, the cylinder head 5 could be formed, for example, using the lost wax method; or, for the case of a two-piece cylinder head, the hot plugs 5 could be integrated with the lower cylinder head.

Further, a two-cycle engine was used in the examples, but these inventions could also be adapted to four-cycle types if the intake and exhaust ports opened into the cylinder bore.

As described above, the air intake openings and exhaust openings are formed in the cylinder block in order that the auxiliary combustion chambers can be formed virtually throughout the cylinder head. Because the volume composed of the auxiliary combustion chamber and its connecting hole occupies about 65 to 95% of the total volume of the combustion chambers when the piston is at its top dead point, the majority of the intake air is sent from the main combustion chamber into the auxiliary combustion chamber.

Compared with the prior art, this results in more effective air utilization in burning the fuel in the auxiliary combustion chambers, allowing higher engine output without increasing the engine's size.

Additionally, the minimum cross sectional area of the connecting holes is set to be from about 1.3 to 2.2% of the cross-sectional area of the cylinder bores, preventing the connecting holes from imposing too much resistance to the flow of air from the main combustion chambers into the auxiliary combustion chambers and to the flow of combustion gases from the auxiliary combustion chambers into the main combustion chambers, thereby permitting the generation of a strong vortex flow inside the auxiliary combustion chambers, thus improving the efficiency of the air fuel mixture, and facilitating the flow of the combustion gases into the main combustion chambers.

It is possible, accordingly, to further improve output through the combined effects of the higher air utilization and the improvement in combustion efficiency.

Since a step area has been established on the inside wall of the auxiliary combustion chambers that is approximately perpendicular to the direction of the swirl therein, a turbulence is created in the vortex flow that serves to approximately uniformly disperse the fuel throughout the entire auxiliary combustion chamber.

This design results in combustion beginning earlier after the injection of the fuel and in it being sustained over a longer interval, thereby adequately burning the fuel in the auxiliary combustion chambers and inhibiting the inflow of unburned gases into the main combustion chambers. To wit, lower exhaust smoke emissions result since neither incomplete combustion nor carbon production are likely to be produced. The adequacy of combustion also serves to improve the engine's output. a further advantage is that this design prevents carbon or tar, due to incomplete combustion, from being deposited in the circumferential piston ring grooves on the piston, or in the gasket area between the cylinder body and the cylinder head.

In addition, because rapid combustion has been inhibited, the rate of pressure increase is smaller, lowering combustion noise. Relatively lower combustion temperature which reduces NOₓ content in the exhaust emissions is made possible too.

The extension of the axial line of the connecting holes tangentially from the inside wall surface of the auxiliary combustion chambers toward the approximate center of the crown of the piston during the initial period of the expansion stroke, causes the combustion gases flowing into the main combustion chamber from the auxiliary combustion chamber to blow against the center of the piston crown, thereby facilitating the dispersion of the heat of the combustion gases to the periphery of the piston.

Furthermore, since only a part of the piston is subjected to excessive amounts of heat, its longevity is thereby improved.

Further, a configuration is provided whereby the air intake openings and exhaust openings are opened and closed by the piston, and because a variable compression mechanism has been installed which, during low and mid-range engine RPM operations lowers the position of the top edge of the opening of the foregoing exhaust openings to, and which, during high RPM operating ranges raises that edge, then during low to mid-range RPM operating ranges there is a relatively higher compression ratio and a more delayed exhaust timing and during high RPM operating ranges there is a relatively lower compression ratio and a more advanced exhaust timing, and moreover a larger cross sectional area of the openings of the exhaust ports.

This configuration increases the compression ratio during starting which makes the engine easier to start, and which further stabilizes the engine rotation in the low and mid-speed ranges. Further, during high RPM operations, not only is pumping loss reduced, but there is less exhaust resistance, resulting in improved output.

## Claims

1. Internal combustion engine of the auxiliary vortex combustion chamber type, wherein
each cylinder of the engine comprises a main combustion chamber (27) within the cylinder, and
an auxiliary combustion chamber (30) is associated with each cylinder,
said auxiliary combustion chamber (30) being formed in a cylinder head (5) of the engine and connected to the respective main combustion chamber (27) through a connection hole (28),
said auxiliary combustion chamber (27) extending over a major part of the cross-section of the cylinder,
**characterized in that**
the minimum cross-sectional area of the connection hole (28) is determined on the basis of a volume ratio which is defined as the volume of the auxiliary combustion chamber (30) and the connection hole (28) to the volume of the auxiliary combustion chamber (30), the main combustion chamber (27) and the connection hole (28) at top dead centre of the respective piston (20), so that the cross-sectional area is small when the volume ratio is small, and the minimum cross-sectional area is higher when the volume ratio is higher, said minimum cross-sectional area of the connection hole (28) is 1.3% of the cross-sectional area of the cylinder bore (2a) when the volume ratio is 65% and is 2.2% when the volume ratio is 97%.

2. Engine according to claim 1, **characterized in that** an inner wall surface of the auxiliary combustion chamber (30) is provided with a continuous stepped edge or protrusion (42), said stepped edge or protrusion (42) being substantially perpendicular to the direction of swirl of a vortex generated in the auxiliary combustion chamber (30).

3. Engine according to claim 1 or 2, **characterized in that** the cylinder head (5) comprises a lower head (5a) having at least one portion forming a part of the auxiliary combustion chamber (30) and a top cylinder head (5c) having at least one portion forming part of the same auxiliary combustion chamber (30).

4. Engine according to claim 3, **characterized in that** the part of the auxiliary combustion chamber (30) formed in the top cylinder head (5c) is semi circular in cross section in a plane comprising the longitudinal axis (C) of the cylinder, and
the part of the auxiliary combustion chamber (30) in the lower head (5a) in cross section has the form of an open trapeze,
said stepped edge or protrusion (42) being provided in the contacting plane of the lower head (5a) and the top cylinder head (5c).

5. Engine according to one of claims 3 or 4, **characterized in that** the part of the auxiliary combustion chamber (30) in the lower head (5a) is formed by a hot plug (5b) received by said lower head (5a), said hot plug (5b) being arranged between said auxiliary combustion chamber (30) and said main combustion chamber (21) and comprising said connection hole (28).

6. Engine according to one of claims 3 to 5, **characterized in that** said protrusion (42) is formed by a gasket (45) located between the top cylinder head (5c) and the lower head (5a), said gasket (45) having a central opening in registry with the auxiliary combustion chamber (30), the edge of said central opening protruding into the auxiliary combustion chamber (30).

7. Engine according to one of claims 1 to 6, **characterized in that** the connecting hole (28) extends tangentially from the inner wall surface of the auxiliary combustion chamber (30) and is directed towards a centre area of a crown (18a) of the respective piston (18) at the beginning of its expansion stroke.

8. Engine according to one of claims 1 to 7, **characterized by** air intake and exhaust openings which are opened and closed by said piston (18), and by a compression ratio variation mechanism (26) which is adapted to lower the upper edge position of the exhaust opening under low and mid range revolutions per minute of the engine and to raise the upper edge of the exhaust opening under high revolutions per minute of the engine.

## Patentansprüche

1. Verbrennungsmotor mit Wirbelvorkammer, wobei
jeder Zylinder des Motors eine Hauptverbrennungskammer (27) innerhalb des Zylinders umfaßt und
eine Vorkammer (30) zu jedem Zylinder gehört, wobei diese Vorkammer (30) in einem Zylinderkopf (5) des Motors ausgebildet wird und über eine Anschlußöffnung (28) mit der jeweiligen Hauptverbrennungskammer (27) verbunden ist,
und sich die Vorkammer (30) über einen großen Teil des Querschnitts des Zylinders erstreckt,
**dadurch gekennzeichnet, daß**
die minimale Querschnittsfläche der Anschlußöffnung (28) auf der Grundlage eines Volumenverhältnisses bestimmt wird, welches als das Volumen der Vorkammer (30) und der Anschlußöffnung (28) zum Volumen der Vorkammer (30), der Hauptverbrennungskammer (27) und der Anschlußöffnung (28) am oberen Totpunkt des jeweiligen Kolbens (20) definiert ist, so daß die Querschnittsfläche klein ist, wenn das Volumenverhältnis klein ist, und die minimale Querschnittsfläche größer ist, wenn das Volumenverhältnis größer ist, wobei die minimale Querschnittsfläche der Anschlußöffnung (28) 1,3 % der Querschnittsfläche der Zylinderbohrung (2a) beträgt, wenn das Volumenverhältnis bei 65 % liegt, und 2,2 %, wenn das Volumenverhältnis bei 97 % liegt.

2. Motor nach Anspruch 1, **dadurch gekennzeichnet, daß** eine Innenwandfläche der Vorkammer (30) einen durchgehend abgestuften Rand oder Vorsprung (42) aufweist, wobei der abgestufte Rand oder Vorsprung (42) im wesentlichen senkrecht zur Verwirbelungsrichtung eines in der Vorkammer (30) erzeugten Wirbels verläuft.

3. Motor nach Anspruch 1 oder 2, **dadurch gekennzeichnet, daß** der Zylinderkopf (5) einen unteren Kopf (5a) mit mindestens einem Abschnitt, der einen Teil der Vorkammer (30) bildet, und einen oberen Zylinderkopf (5c), mit mindestens einem Abschnitt umfaßt, der einen Teil der gleichen Vorkammer (30) bildet.

4. Motor nach Anspruch 3, **dadurch gekennzeichnet, daß** der Teil der Vorkammer (30) im oberen Zylinderkopf (5c) einen halbkreisförmigen Querschnitt auf einer Ebene aufweist, welche die Längsachse (C) des Zylinders umfaßt, und
der Teil der Vorkammer (30) im unteren Kopf (5a) einen Querschnitt aufweist, der die Form eines offenen Trapezes hat, und der abgestufte Rand oder Vorsprung (42) in der Berührungsebene des unteren Kopfes (5a) und des oberen Zylinderkopfes (5c) geschaffen wird.

5. Motor nach einem der Ansprüche 3 oder 4, **dadurch gekennzeichnet, daß** der Teil der Vorkammer (30) im unteren Kopf (5a) durch eine Zündkerze (5b) gebildet wird, die vom unteren Kopf (5a) aufgenommen wird, wobei die Zündkerze (5b) zwischen der Vorkammer (30) und der Hauptverbrennungskammer (27) angeordnet ist und die Anschlußöffnung (28) umfaßt.

6. Motor nach einem der Ansprüche 3 bis 5, **dadurch gekennzeichnet, daß** der Vorsprung (42) von einer Dichtung (45) gebildet wird, die sich zwischen dem oberen Zylinderkopf (5c) und dem unteren Kopf (5a) befindet, wobei die Dichtung (45) eine zur Vorkammer (30) ausgerichtete zentrale Öffnung aufweist und der Rand der zentralen Öffnung in die Vorkammer (30) hineinragt.

7. Motor nach einem der Ansprüche 1 bis 6, **dadurch gekennzeichnet, daß** sich die Anschlußöffnung (28) tangential von der lnnenwandfläche der Vorkammer (30) erstreckt und zu Beginn des Arbeitstaktes zu einem zentralen Bereich eines Bodens (18a) des jeweiligen Kolbens (18) ausgerichtet wird.

8. Motor nach einem der Ansprüche 1 bis 7, **gekennzeichnet durch** Lufteinlaß- und Auslaßöffnungen, die von dem Kolben (18) geöffnet und geschlossen werden, und durch eine Vorrichtung zur Veränderung des Verdichtungsverhältnisses (26), welches beim Betrieb des Motors im unteren und mittleren Drehzahlbereich die obere Randposition der Auslaßöffnung senkt und im hohen Drehzahlbereich des Motors den oberen Rand der Auslaßöffnung des Motors anhebt.

## Revendications

1. Moteur à combustion interne de type à préchambre de combustion à vortex, dans lequel :
chaque cylindre du moteur comprend une chambre de combustion principale (27) à l'intérieur du cylindre, et
une préchambre de combustion (30) est associée à chaque cylindre, ladite préchambre de combustion (30) étant formée dans une culasse (5) du moteur et en connexion avec la chambre de combustion principale respective (27) par l'intermédiaire d'un orifice de connexion (28),
ladite préchambre de combustion (27) s'étendant sur une grande partie de la coupe transversale du cylindre,
caractérisé en ce que
la surface minimale en coupe transversale de l'orifice de connexion (28) est déterminée sur la base d'un rapport de volume qui est défini comme étant le volume de la préchambre de combustion (30) et de l'orifice de connexion (28) par rapport au volume de la préchambre de combustion (30), de la chambre de combustion principale (27) et de l'orifice de connexion (28) au point mort haut du piston respectif (20), de sorte que la surface en coupe transversale est petite lorsque le rapport de volume est faible, et que la surface minimale en coupe transversale est plus importante lorsque le rapport de volume est plus élevé, ladite surface minimale en coupe transversale de l'orifice de connexion (28) est égale à 1,3% de la surface en coupe transversale de l'alésage du cylindre (2a) lorsque le rapport de volume est égal à 65%, et est égale à 2,2% lorsque le rapport de volume est égal à 97%.

2. Moteur selon la revendication 1, caractérisé en ce qu'une surface de paroi interne de la préchambre de combustion (30) comporte un bord à étage continu ou saillie (42), ledit bord à étage ou saillie (42) étant essentiellement perpendiculaire à la direction du tourbillon d'un vortex généré dans la préchambre de combustion (30).

3. Moteur selon la revendication 1 ou la revendication 2, caractérisé en ce que la culasse (5) comprend une partie basse de culasse (5a) comportant au moins une partie qui est intégrée à la préchambre de combustion (30) et une partie haute de culasse (5c) qui comporte au moins une partie intégrée à la même préchambre de combustion (30).

4. Moteur selon la revendication 3, caractérisé en ce que la partie de la préchambre de combustion (30) formée dans la partie haute de culasse (5c) a une coupe transversale semi circulaire dans un plan comprenant l'axe longitudinal (C) du cylindre, et
en ce que la partie de la préchambre de combustion (30) située dans la partie basse de culasse (5a) a en coupe transversale une forme de trapèze ouvert,
ledit bord à étage ou saillie (42) étant aménagé dans le plan de contact entre la partie basse de culasse (5a) et la partie supérieure de culasse (5c).

5. Moteur selon l'une des revendications 3 ou 4, caractérisé en ce que la partie de la préchambre de combustion (30) située dans la partie basse de culasse (5a) est formée par un point chaud (5b) aménagé dans ladite partie basse de culasse (5a), ledit point chaud (5b) étant disposé entre ladite préchambre de combustion (30) et ladite chambre de combustion principale (21) et comprenant ledit orifice de connexion (28).

6. Moteur selon l'une des revendications 3 à 5, caractérisé en ce que ladite saillie (42) est formée par un joint d'étanchéité (45) disposé entre la partie haute de culasse (5c) et la partie basse de culasse (5a), ledit joint d'étanchéité (45) comportant une ouverture centrale donnant dans la préchambre de combustion (30), le bord de ladite ouverture centrale étant en saillie à l'intérieur de la préchambre de combustion (30).

7. Moteur selon l'une des revendications 1 à 6, caractérisé en ce que l'orifice de connexion (28) s'étend de manière tangentielle à la surface de la paroi interne de la préchambre de combustion (30) et se dirige vers une surface centrale d'une tête de piston (18a) du piston respectif (18) au début de sa course de détente.

8. Moteur selon l'une des revendications 1 à 7, caractérisé par des ouvertures d'admission d'air et d'échappement qui sont ouvertes et fermées par ledit piston (18), et par un mécanisme de modification de rapport de compression (26) qui est adapté pour abaisser la position supérieure de bord de l'ouverture d'échappement dans des conditions de plages basse et intermédiaire de tours par minute du moteur et pour relever le bord supérieur de l'ouverture d'échappement dans des conditions de tours par minute élevés du moteur.
